# FASCICULE DE BREVET EUROPEEN

(11) **EP 2 045 749 B1**
(45) Date de publication et mention de la délivrance du brevet: **29.04.2015**
(21) Numéro de dépôt: 08165171.3
(22) Date de dépôt: 25.09.2008
(51) Int. Cl.: G06F 21/55

(54) **Procédé de sécurisation d'un terminal équipé d'au moins une interface de communication**
Sicherungsverfahren eines Endgeräts, das mit mindestens einer Kommunikationsschnittstelle ausgestattet ist
Method of securing a terminal equipped with at least one communication interface

(30) Priorité: 28.09.2007 FR 0757934
(43) Date de publication de la demande: 08.04.2009
(73) Titulaire: Orange, 75015 Paris (FR)
(72) Inventeur: Charles, Olivier, 92140 Clamart (FR); Ville, Frédérique, 75015 Paris (FR)

(56) Documents cités:
- WO-A-02/087152

## Description

L'invention concerne le domaine des terminaux informatiques et plus particulièrement un terminal équipé d'au moins une interface de communication et un procédé de sécurisation d'un tel terminal.

Dans le domaine des terminaux informatiques, notamment dans celui des terminaux de type ordinateur personnel ou PC (Personnal Computer), se développe l'utilisation de périphériques portables, sous forme par exemple de clefs USB. Ces clefs USB comprennent des mémoires susceptibles de stocker à la fois des données et des programmes. Il est nécessaire, en conséquence, de prévoir des moyens pour sécuriser le contenu du PC auquel un tel périphérique est raccordé afin d'éviter toute contamination par un virus informatique ou un programme non autorisé.

Différentes solutions techniques ont à ce jour été développées pour sécuriser le contenu du PC.

Une première solution consiste à inhiber par programme l'utilisation de certains ports de communication après configuration et installation du PC. Cette solution est cependant trop radicale car elle empêche toute utilisation ultérieure du ou des ports de communication concernés.

Une deuxième solution consiste à n'autoriser l'utilisation d'un port de communication que pour certains périphériques préalablement déclarés comme étant autorisés. Cette solution suppose de disposer d'un mécanisme d'identification de périphérique et de procéder à une déclaration préalable des périphériques autorisés. Elle s'avère fastidieuse et complexe à mettre en oeuvre.

Une troisième solution consiste à mettre en oeuvre un mécanisme nommé HIPS (en anglais "Host Intrusion Prevention System") de contrôle d'accès aux fichiers stockés dans le PC en fonction de l'identité du ou des programmes susceptibles d'accéder à ces fichiers. Un tel mécanisme est lourd à gérer puisqu'il suppose de définir préalablement des droits d'accès pour chaque programme et fichier. En outre, il a l'inconvénient de ne pas masquer l'arborescence des fichiers mais uniquement le contenu des fichiers. Enfin, un tel mécanisme est contournable par un utilisateur du PC.

Le document WO 02/087152 décrit un ensemble de moyens pour sécuriser un terminal par emploi de règles de sécurité définies relativement à des événements à détecter.

Un des buts de l'invention est de remédier à des insuffisances et inconvénients de l'état de la technique et/ou d'y apporter des améliorations.

L'invention concerne, selon un premier aspect, un procédé de sécurisation d'un terminal selon la revendication 1.

L'invention tire partie des événements détectés pour déterminer un niveau de privilèges, c'est-à-dire un ensemble de droits à attribuer à l'utilisateur courant du terminal. A travers ces droits, il est possible de contrôler l'accès aux ressources physiques et logiques du terminal.

Le fait que le deuxième ensemble de droits soit déterminé en outre en fonction d'un état d'authentification d'un utilisateur permet de renforcer la sécurité du terminal, puisque le niveau de privilège pourra être réduit pour un utilisateur non authentifié ou a contrario augmenté pour un utilisateur authentifié.

Selon un mode de réalisation, le procédé comprend en outre une étape de basculement du mode de fonctionnement courant vers un autre mode de fonctionnement dans lequel l'utilisateur courant dudit terminal bénéficie dudit ensemble de droits, ladite étape de basculement étant destinée à être exécutée lorsque l'ensemble de droits déterminé à l'étape de détermination est différent d'un ensemble de droits attribué à l'utilisateur courant avant ladite détection. Par un mécanisme simple de basculement d'un mode de fonctionnement à un autre, il est possible de contrôler le niveau de privilège attribué à un utilisateur dès lors qu'un mode de fonctionnement permet à un utilisateur de bénéficier de l'ensemble des droits associés à ce mode de fonctionnement et au niveau de privilège attribué.

Selon un mode de réalisation particulier, l'étape de basculement comprend une étape de mise en veille, respectivement d'arrêt, d'une première session de travail et une étape de réactivation, respectivement de démarrage, d'une deuxième session de travail. Le basculement d'une session de travail à une autre est utilisable pour mettre en oeuvre l'invention simplement.

L'invention concerne, selon un deuxième aspect, un terminal selon la revendication 7.

Selon un mode de réalisation particulier, le terminal selon l'invention comprend des moyens de mise en oeuvre des étapes du procédé selon l'invention.

Les avantages énoncés pour le procédé selon l'invention sont transposables au terminal selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un terminal informatique et conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un terminal selon l'invention;
- la figure 2 représente un organigramme d'un mode de réalisation du procédé selon l'invention;
- les figures 3 et 4 représentent chacune un diagramme de changement d'états mis en oeuvre lors d'une étape du procédé selon l'invention.

L'invention est décrite dans le cas d'exemple de son application à un terminal formé par un ordinateur personnel ou PC (Personal Computer). L'invention est cependant applicable à tout type de terminal disposant d'une interface de communication permettant l'établissement d'une liaison avec un périphérique.

Dans le contexte de l'invention, on considère qu'il y a deux types d'utilisateurs pour un tel terminal: les utilisateurs propriétaires et les utilisateurs locataires. A chacun de ces deux types d'utilisateur est associé un niveau de privilège, c'est-à-dire un ensemble de droits définis relativement aux ressources physiques et logiques du terminal : disques durs, périphériques, programmes, fichiers et/ou données, etc. Ces droits se décomposent usuellement, et de manière connue, en droits de lecture, droits d'écriture et/ou droits d'exécution. Cependant toute autre décomposition est envisageable.

Un niveau de privilège est utilisé également pour définir quels sont les fichiers, programmes et/ou données visibles par l'utilisateur bénéficiant de ce niveau de privilège. Un niveau de privilège est utilisé en outre pour définir quels sont les périphériques utilisables par un utilisateur et pour quel type d'usage. D'autres types de droits peuvent encore être définis par un niveau de privilège.

Au sens usuel du terme "propriétaire", un seul utilisateur est effectivement propriétaire du PC. Il s'agit d'un utilisateur qui a un usage régulier et légitime du PC. L'invention permet à un tel utilisateur de bénéficier d'un niveau de privilège élevé, associé à son statut d'utilisateur propriétaire. Cependant, pour la mise en oeuvre de l'invention, rien ne s'oppose à ce que plusieurs utilisateurs, qu'ils soient propriétaires ou non du PC au sens usuel du terme, puissent bénéficier à tour de rôle du statut d'utilisateur propriétaire du PC. Mais, selon l'invention, à un instant donné, un seul utilisateur bénéficie de ce statut d'utilisateur propriétaire.

Les utilisateurs qui ne bénéficient pas du statut d'utilisateur propriétaire sont tous des utilisateurs ayant le statut d'utilisateur locataire. II s'agit par exemple d'un utilisateur auquel l'utilisateur propriétaire a prêté temporairement son PC. Un niveau de privilège restreint, mais suffisant pour leur permettre une utilisation du PC en tant que locataire, est attribué à tout utilisateur locataire.

Les droits définis pour un ensemble de programmes, fichiers ou données par le niveau de privilège associé à un utilisateur locataire sont généralement réduits par rapport à ceux définis pour ce même ensemble de programmes, fichiers ou données par le niveau de privilège d'un utilisateur propriétaire. En particulier, il peut être prévu que les fichiers et répertoires visibles par un utilisateur locataire soient moins nombreux, ou au moins différents, de ceux visibles par un utilisateur propriétaire.

Avantageusement, un utilisateur bénéficiant du statut d'utilisateur propriétaire peut définir les droits associés au statut d'utilisateur locataire.

L'invention permet de déterminer simplement si un utilisateur d'un terminal doit être considéré comme utilisateur propriétaire ou comme utilisateur locataire par détection de certains événements, liés soit à l'établissement d'une liaison entre le terminal et un périphérique, soit à l'état d'authentification de cet utilisateur.

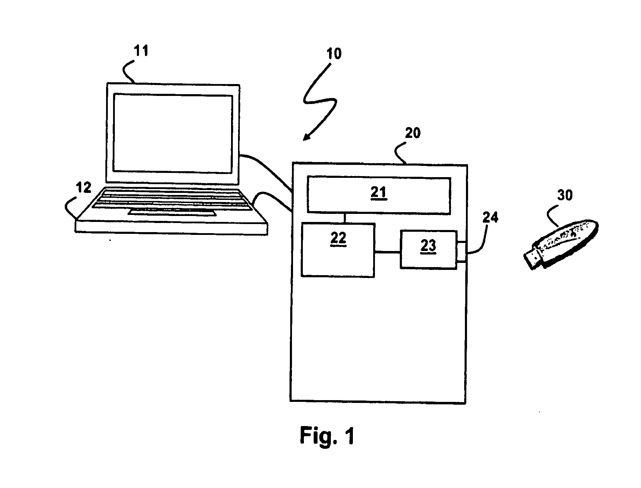

L'invention est décrite plus en détail par référence à la figure 1. Le terminal 10, sous forme d'ordinateur personnel ou PC (Personal Computer), comprend un écran 11, un clavier 12, une souris et une unité centrale 20. L'unité centrale comprend un processeur de données, une mémoire, un ou plusieurs disques durs, une ou plusieurs interfaces de communication 24, ainsi qu'un ou plusieurs bus de communication permettant l'établissement de liaisons de communication entre le processeur de données et les interfaces de communication.

Dans le cadre de l'invention, on considère toute interface de communication permettant l'établissement d'une liaison, filaire ou non filaire, avec un périphérique. Une telle interface est par exemple une interface USB (Universal Serial Bus), une interface Ethernet, une interface PCMCIA (Personal Computer Memory Card International Association), une interface port IEEE1394, etc.

L'unité centrale comprend également un logiciel de gestion mettant en oeuvre un procédé selon l'invention lorsque ce logiciel est exécuté par le processeur de données de l'unité centrale. Ce logiciel de gestion comprend trois modules logiciels:
- un premier module 21, dit module d'authentification, permettant l'authentification d'un utilisateur du PC, par exemple au moyen d'un mot de passe et d'un code d'accès ou nom d'utilisateur;
- un deuxième module 22, dit module de commutation, permettant d'effectuer des changements de niveau de privilège;
- un troisième module 23, dit module de détection, permettant de détecter soit l'établissement d'une liaison entre un périphérique et le PC au travers une des interfaces de communication du PC, soit l'interruption d'une liaison établie entre un périphérique et le PC au travers une des interfaces de communication du PC.

Dans le cas d'exemple décrit, le module de détection 23 effectue une surveillance d'une ou de plusieurs des interfaces de communication du PC.

Dans le cas où l'interface 24 de communication surveillée permet l'établissement d'une liaison filaire avec un périphérique 30, c'est-à-dire dans le cas d'un raccordement par câble ou d'un raccordement par insertion directe - par exemple, d'une clef USB - un tel raccordement est détectable électriquement. Par exemple, si l'interface de communication est une interface USB avec une prise conforme au standard USB, l'insertion d'une clef USB dans cette prise provoque l'établissement d'une liaison électrique entre la clef et cette interface de communication. L'établissement d'une telle liaison par raccordement est détectable au niveau de l'interface physique et l'événement électrique détecté est signalé au pilote logiciel associé à l'interface de communication.

Dans le cas où l'interface 24 de communication surveillée permet l'établissement d'une liaison non filaire avec un périphérique 30, par exemple une liaison radio, l'entrée d'un périphérique dans le périmètre de détection radio de l'interface ne suffit pas à compromettre la sécurité du terminal. Ce n'est que lorsqu'il y a établissement d'une liaison radio que le risque existe, du fait de la possibilité de transférer des données via cette liaison radio. Dans une telle situation, c'est donc l'établissement d'une liaison radio qui est l'événement à détecter pour la mise en oeuvre de l'invention.

En généralisant, le module de détection 23 est conçu pour détecter l'occurrence d'un événement parmi les deux événements suivants:
- un établissement, via une interface 24 de communication du PC, d'une liaison entre un périphérique 30 et le PC 10 (événement désigné ici par "E1"); ou
- une interruption d'une liaison établie entre un périphérique 30 et le PC 10 via une interface 24 de communication du PC (événement désigné ici par "E2").

En cas de détection de l'un de ces événements, le module de détection 23 est conçu pour envoyer au module de commutation 22 un message de notification pour lui signaler la nature de l'événement détecté, c'est-à-dire si un établissement ou une interruption de liaison a été détecté(e).

Le module de détection 23 est de préférence intégré dans le ou les pilotes d'interface de communication associés aux interfaces de communication à surveiller. Il peut également être intégré dans un module du système d'exploitation du PC. Dans tous les cas, il est démarré automatiquement au démarrage du PC, de manière à pouvoir détecter tout événement intervenant sur une des interfaces de communication à surveiller aussi bien lors du démarrage du PC, qu'après le démarrage de ce PC. Inversement, le module de détection 23 est actif le plus longtemps possible, notamment jusqu'au déclenchement de la procédure d'arrêt du PC.

Le module d'authentification 21 est conçu pour permettre à un utilisateur propriétaire du PC de s'authentifier et donc se faire connaître en tant qu'utilisateur propriétaire du PC. Une fois authentifié, un tel utilisateur bénéficie alors d'un niveau de privilège associé à son statut de propriétaire. Inversement, un utilisateur non authentifié ne pourra bénéficier d'un même niveau de privilège qu'un utilisateur propriétaire, que dans certaines conditions qui seront décrites plus loin. Dans les autres cas, un utilisateur ne bénéficie que du niveau de privilège associé au statut d'utilisateur locataire. Ce niveau de privilège confère à l'utilisateur courant du PC des droits plus restreints que ceux conférés par le niveau de privilège associé au statut d'utilisateur propriétaire.

Le module logiciel d'authentification 21 est démarré à l'initiative d'un utilisateur du PC. Cet utilisateur saisit alors, dans une interface utilisateur appropriée, les données d'authentification demandées par le module 21. Après analyse de ces données d'authentification, et en cas d'authentification réussie, l'utilisateur courant du PC est reconnu par le module d'authentification 21 comme un utilisateur propriétaire du PC.

Inversement, un utilisateur reconnu par le module d'authentification 21 comme un utilisateur propriétaire du PC, peut décider d'invalider son authentification. Dans ce cas cet utilisateur démarre le module d'authentification 21 et renseigne une interface utilisateur appropriée pour transmettre sa demande d'invalidation. Lorsque sa demande d'invalidation est acceptée, un statut d'utilisateur locataire est associé à l'utilisateur courant du PC.

En cas d'authentification réussie, comme en cas d'acceptation d'une demande d'invalidation, le module d'authentification 21 est conçu pour envoyer au module de commutation 22 un message de notification pour lui signaler la nature de l'événement traité par le module d'authentification 21, c'est-à-dire si une authentification ou une invalidation d'authentification a eu lieu. Ces deux événements sont désignés respectivement par "A1" (authentification) et "A2" (invalidation d'une authentification).

Le module de commutation 22 communique avec les modules 21 et 23 et notamment reçoit et traite les messages de notification émis par ces deux modules. En particulier, le module de commutation 22 est conçu pour déterminer, suite à la réception d'un message de notification, le niveau de privilège, c'est-à-dire un ensemble de droits à attribuer à un utilisateur du terminal. Le niveau de privilège déterminé dépend notamment de l'événement notifié au moyen du message de notification reçu. Le mode de détermination est décrit plus en détail ci-dessous.

Le module de commutation 22 est conçu également pour provoquer un basculement d'un mode de fonctionnement courant, dans lequel l'utilisateur courant du terminal bénéficie d'un ensemble de droits associé au niveau de privilège courant, vers un autre mode de fonctionnement dans lequel l'utilisateur courant du terminal bénéficie d'un ensemble de droits associé au niveau de privilège déterminé. Ce basculement n'est effectué que lorsque le niveau de privilèges déterminé à l'étape de détermination est différent du niveau de privilège courant, avant réception du message de détection.

De manière pratique et connue, un niveau de privilège donné, c'est-à-dire un ensemble de droits définis en relation avec une ou des ressources du terminal, est associé à une session de travail et le basculement d'un niveau de privilège à un autre est effectué lors du basculement d'une session de travail à une autre, que ce basculement s'effectue par interruption (soit par fermeture complète, soit simplement mise en veille) de la session de travail courante puis ouverture (soit démarrage d'une nouvelle session de travail ou réactivation d'une session de travail précédemment mise en veille) d'une autre session de travail.

La notion de "session de travail" est utilisée ici dans son sens usuel, cette notion étant bien connue des utilisateurs du système d'exploitation Windows®. Elle correspond, de manière connue, à une période de temps pendant laquelle des ressources physiques ou logiques sont accessibles par un utilisateur et un ensemble de droits est concédé à un utilisateur du terminal, droits qui sont définis relativement à ces ressources.

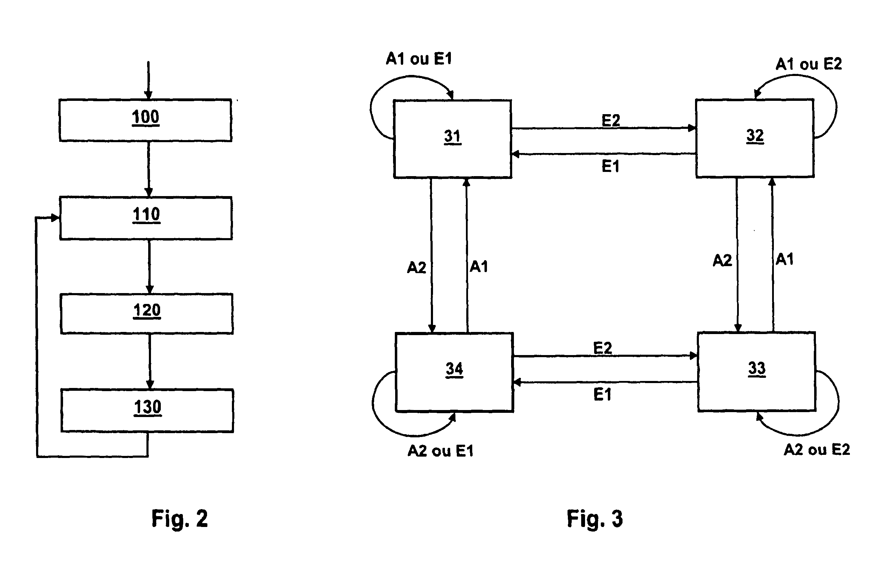

Le procédé selon l'invention est décrit plus en détail par référence à la figure 2.

A l'étape 100, le PC est démarré par un utilisateur. Les modules logiciels 22 et 23 sont démarrés automatiquement par le système d'exploitation. Une première session de travail est ouverte: elle associée à un premier niveau de privilège désigné par "NProp", qui est celui d'un utilisateur propriétaire. Ce niveau de privilège est le niveau de privilège par défaut. Un ensemble de droits est donc sélectionné par défaut.

A l'étape 110, le module de commutation 22 est dans un état où il est apte à recevoir un message de notification en provenance du module d'authentification 21 ou du module de détection 23. A réception d'un tel message, le module de commutation exécute l'étape 120 suivante.

A l'étape 120, le module de commutation 22 détermine un niveau de privilège, niveau qui est fonction de l'événement notifié via le message reçu et d'un état courant dans un automate modélisant les changements de niveau de privilège selon les événements notifiés.

Cet automate est représenté schématiquement à la figure 3. Il comprend quatre états, représentés par des rectangles et référencés 31, 32, 33, 34. Un niveau de privilège est associé à chacun de ces états: aux états 31, 32 et 33 est associé le niveau de privilège "NProp", qui est celui d'un utilisateur propriétaire, tandis qu'à l'état 34 est associé un niveau de privilège désigné par "NLoc" qui est celui d'un utilisateur locataire. Chaque transition possible entre deux de ces états est représentée par une flèche et est associée à un ou plusieurs des événements parmi les événements "E1", "E2", "A1", "A2".

Cet automate reflète le fait que chacun des états 31, 32, 33, 34 est associé à un couple de valeurs de variables d'état binaires:
- la première variable binaire représentant le fait qu'une liaison soit établie ou non entre le PC et un périphérique via une interface de communication à surveiller,
- la deuxième variable représentant le fait que l'utilisateur courant soit authentifié ou non. Ainsi :

- l'état 31 correspond à un état dans lequel une liaison est établie entre le PC et un périphérique de ce PC et l'utilisateur courant est authentifié;
- l'état 32 correspond à un état dans lequel une liaison n'est pas établie entre le PC et un périphérique de ce PC et l'utilisateur courant est authentifié;
- l'état 33 correspond à un état dans lequel une liaison n'est pas établie entre le PC et un périphérique de ce PC et l'utilisateur courant n'est pas authentifié;
- l'état 34 correspond à un état dans lequel une liaison est établie entre le PC et un périphérique de ce PC et l'utilisateur courant n'est pas authentifié.

De la définition de ces états, découle naturellement la définition des transitions possibles entre ces états, puisque selon l'événement notifié, il y a changement de la valeur d'une des deux variables d'état binaires.

L'automate représenté à la figure 3 peut être mis en oeuvre par génération d'une table définissant, pour état et pour chaque événement possible, le nouvel état courant. Un exemple d'une telle table est donné ci-dessous.

| Etat courant | Evénement notifié | | | |
|---|---|---|---|---|
| | E1 | E2 | A1 | A2 |
| 31 | 31 | 32 | 31 | 34 |
| 32 | 31 | 32 | 32 | 33 |
| **33** | **34** | **33** | **32** | **33** |
| 34 | 34 | 33 | 31 | 34 |

Il ressort clairement de cette table que, lorsque l'état courant est par exemple l'état 33, le nouvel état courant sera :
- l'état 34 si l'occurrence de l'événement "E1" est notifiée;
- l'état 33 si l'occurrence de l'événement "E2" est notifiée;
- l'état 32 si l'occurrence de l'événement "A1" est notifiée;
- l'état 33 si l'occurrence de l'événement "A2" est notifiée.

En d'autres termes, la figure 3 représente de manière graphique les transitions possibles entre les états 31, 32, 33, 34 telles que définies dans le tableau ci-dessous.

Le nouveau niveau de privilège (niveau de privilège courant) se déduit ensuite du nouvel état courant, par exemple par utilisation de la table de correspondance ci-dessous:

| Etat courant | Niveau de privilège |
|---|---|
| 31 | NProp |
| 32 | NProp |
| 33 | NProp |
| 34 | NLoc |

Lors de la première exécution de l'étape 120, l'état courant est l'état 32, c'est-à-dire que suite au démarrage du terminal, l'utilisateur courant du terminal bénéficie par défaut du statut d'utilisateur propriétaire.

A l'étape 130, le module de commutation effectue un changement de mode de fonctionnement, par fermeture de la session courante puis ouverture d'une nouvelle session, lorsque le nouveau niveau déterminé à l'étape 120 est différent du niveau de privilège courant, associé à la session courante.

Puis le procédé se poursuit à l'étape 110, les étapes 110 à 130 étant exécutées cycliquement jusqu'à arrêt du PC.

Selon un mode de réalisation particulier, une temporisation d'une durée prédéfinie est déclenchée suite à l'arrivée dans l'état 32, temporisation au bout de laquelle le nouvel état courant est l'état 34, associé au niveau de privilège "Nloc", si, durant cette période, aucune liaison n'est établie entre le PC et un périphérique surveillé par le module de détection 23, c'est-à-dire l'événement E1 n'est pas détecté durant cette période. De cette manière, un terminal inutilisé pendant une certaine durée bascule automatiquement dans un mode de fonctionnement où le niveau de privilège est réduit. Cela limite le risque d'utilisation du terminal par une personne non autorisée. Par contre, tant que la liaison entre le périphérique et le PC est maintenue et que cet utilisateur est authentifié, situation qui correspond à l'état 31, aucun basculement ne s'effectue, l'utilisateur du terminal bénéficiant dans cet état du statut d'utilisateur propriétaire.

Le principe de l'invention se généralise à la surveillance de plusieurs interfaces de communication. Dans ce cas, il est prévu un module de détection par interface de communication à surveiller. Par contre, un seul module de commutation est nécessaire dans ce cas et chacun des modules de détection est conçu pour envoyer à ce module de commutation un message de notification en cas de détection de l'occurrence de l'un des événements E1 ou E2.

Le principe de l'invention se généralise également à l'utilisation simultanée de plusieurs périphériques. Cette variante implique la présence de plusieurs interfaces de communication lorsqu'une seule liaison peut être établie à un moment donné avec un périphérique. Toutefois, selon la nature de l'interface de communication utilisée, et notamment dans le cas d'une liaison sans fil entre une interface et un périphérique, il est envisageable que plusieurs liaisons de communication avec un périphérique soient établies simultanément avec une interface de communication unique.

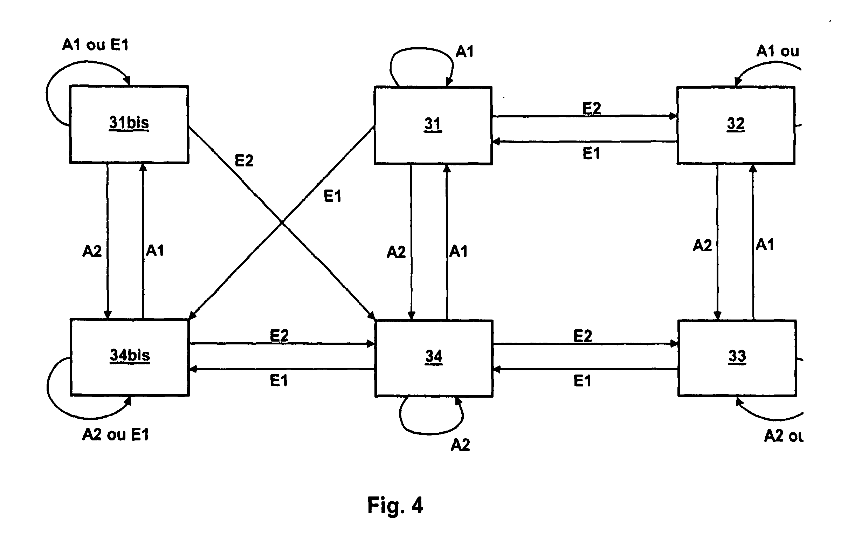

L'automate utilisé dans ce cas est modifié pour prendre en compte une pluralité d'événements de type E1 ou E2. Ce nouvel automate est illustré à la figure 4, dans le cas où on considère que deux liaisons de communication peuvent être établies simultanément avec une ou deux des interfaces de communication à surveiller.

Deux nouveaux états sont définis 31bis et 34bis et les niveaux de privilège associés aux différents états sont cette fois définis comme par la table ci-dessous:

| Etat courant | Niveau de privilège |
|---|---|
| 31 | NProp |
| 32 | NProp |
| 33 | NProp |
| 34 | NLoc |
| 31 bis | NProp |
| 34bis | NLoc |

La table définissant les transitions entre état est donnée ci-dessous.

| Etat courant | Evénement notifié | | | |
|---|---|---|---|---|
| | E1 | E2 | A1 | A2 |
| 31 | 34bis | 32 | 31 | 34 |
| 32 | 31 | 32 | 32 | 33 |
| 33 | 34 | 33 | 32 | 33 |
| 34 | 34bis | 33 | 31 | 34 |
| 31bis | 31bis | 34 | 31bis | 34bis |
| 34bis | 34bis | 31 | 31bis | 34bis |

L'invention se généralise à un nombre quelconque de liaisons de communication, le nombre d'états dans l'automate est 2(1+n) où n est le nombre de liaisons de communication prises en compte.

La partie de l'automate qui définit les transitions entre les états 31, 34 d'une part, et 31 bis, 34bis d'autre part lorsqu'un événement E1 ou E2 est détecté peut en effet être répliquée un nombre quelconque de fois: ainsi on rajoute, à chaque fois qu'une nouvelle liaison de communication doit être prise en compte, une paire d'état 31ter, 34ter, puis 31quater, 34quater etc. Les transitions entre les états 31 bis, 34bis d'une part et 31 ter, 34ter d'autre part sont définies de manière identique aux transitions entre les états 31, 34 d'une part, et 31 bis, 34bis d'autre part, et ainsi de suite pour chaque nouvelle paire d'état rajoutée.

L'invention est applicable à tout terminal informatique disposant d'au moins une interface de communication avec un périphérique de stockage de données.

## Revendications

1. Procédé de sécurisation d'un terminal (10) équipé d'au moins une interface (24) de communication, le procédé comprenant,
- une étape (110) d'analyse des liaisons établies avec le terminal en vue de détecter soit un établissement d'une liaison entre un périphérique (30) et ledit terminal au moyen d'une dite interface de communication, soit une interruption d'une telle liaison,
- une étape de mise en oeuvre de moyens d'authentification d'un utilisateur du terminal,
- une étape pour attribuer à un utilisateur non authentifié par lesdits moyens d'authentification un premier ensemble de droits définis relativement aux ressources physiques et logiques du terminal dont bénéficie,
- une étape (130) de basculement, suite à une détection d'un établissement d'une première liaison entre un périphérique (30) et ledit terminal, d'un premier mode de fonctionnement dans lequel l'utilisateur bénéficie du premier ensemble de droits vers un deuxième mode de fonctionnement dans lequel l'utilisateur courant dudit terminal bénéficie d'un deuxième ensemble de droits plus restreint que le premier ensemble de droits,
- une étape (130) de basculement, suite à une authentification dudit utilisateur par lesdits moyens d'authentification, du deuxième mode de fonctionnement dans lequel l'utilisateur bénéficie du deuxième ensemble de droits vers un troisième mode de fonctionnement dans lequel l'utilisateur courant dudit terminal bénéficie du premier ensemble de droits.

2. Procédé selon la revendication 1, comprenant en outre, lorsque le terminal est dans le deuxième mode de fonctionnement,
- une étape (130) de basculement du deuxième mode de fonctionnement vers le premier mode de fonctionnement en cas de détection d'une interruption de ladite liaison.

3. Procédé selon la revendication 1, dans lequel un ensemble de droits par défaut est sélectionné au démarrage dudit terminal.

4. Procédé selon la revendication 2, dans lequel les étapes de basculement comprennent une étape de mise en veille, respectivement d'arrêt, d'une première session de travail et une étape de réactivation, respectivement de démarrage, d'une deuxième session de travail.

5. Programme informatique comprenant des instructions de code de programme pour l'exécution des étapes d'un procédé selon l'une quelconque des revendications 1 à 4 lorsque ledit programme est exécuté par un processeur de données.

6. Support d'enregistrement lisible par un processeur de données sur lequel est enregistré un programme comprenant des instructions code de programme pour l'exécution des étapes d'un procédé selon l'une quelconque des revendications 1 à 4.

7. Terminal équipé d'au moins une interface de communication, comprenant,
- des moyens (23) d'analyse des liaisons établies avec le terminal en vue de détecter soit un établissement d'une liaison entre un périphérique (30) et ledit terminal au moyen d'une dite interface de communication, soit une interruption d'une telle liaison,
- des moyens (21) d'authentification d'un utilisateur du terminal,
- des moyens pour attribuer à un utilisateur non authentifié par lesdits moyens d'authentification, un premier ensemble de droits définis relativement aux ressources physiques et logiques du terminal,
- des moyens de basculement (130), suite à une détection d'un établissement d'une première liaison entre un périphérique (30) et ledit terminal, d'un premier mode de fonctionnement dans lequel l'utilisateur bénéficie du premier ensemble de droits vers un deuxième mode de fonctionnement dans lequel l'utilisateur courant dudit terminal bénéficie d'un deuxième ensemble de droits plus restreint que le premier ensemble de droits,
- une étape de basculement (130), suite à authentification dudit utilisateur par lesdits moyens d'authentification, du deuxième mode de fonctionnement dans lequel l'utilisateur bénéficie du deuxième ensemble de droits vers le premier mode de fonctionnement dans lequel l'utilisateur courant dudit terminal bénéficie du premier ensemble de droits.

8. Terminal selon la revendication 7, comprenant des moyens de mise en oeuvre des étapes du procédé selon l'une quelconque des revendications 2 à 4.

## Patentansprüche

1. Sicherungsverfahren eines Endgeräts (10), das mit mindestens einer Kommunikationsschnittstelle (24) ausgestattet ist, wobei das Verfahren umfasst:
- einen Schritt (110) der Analyse der mit dem Endgerät hergestellten Verbindungen, um entweder eine Herstellung einer Verbindung zwischen einem Peripheriegerät (30) und dem Endgerät mit Hilfe einer Kommunikationsschnittstelle oder eine Unterbrechung einer solchen Verbindung zu erfassen,
- einen Schritt des Einsatzes von Authentifizierungsmitteln eines Benutzers des Endgeräts,
- einen Schritt der Zuteilung einer ersten Gruppe von Rechten an einen nicht authentifizierten Benutzer durch die Authentifizierungsmittel, welche in Zusammenhang mit den physischen und logischen Ressourcen des Endgeräts definiert sind,
- nach einer Erfassung einer Herstellung einer ersten Verbindung zwischen einem Peripheriegerät (30) und dem Endgerät, einen Schritt (130) des Umschaltens von einem ersten Betriebsmodus, in dem der Benutzer die erste Gruppe von Rechten besitzt, in einen zweiten Betriebsmodus, in dem der laufende Benutzer des Endgeräts eine zweite Gruppe von Rechten besitzt, die eingeschränkter als die erste Gruppe von Rechten ist,
- nach einer Authentifizierung des Benutzers durch die Authentifizierungsmittel, einen Schritt (130) des Umschaltens vom zweiten Betriebsmodus, in dem der Benutzer die zweite Gruppe von Rechten besitzt, in einen dritten Betriebsmodus, in dem der laufende Benutzer des Endgeräts die erste Gruppe von Rechten besitzt.

2. Verfahren nach Anspruch 1, ferner umfassend, wenn das Endgerät im zweiten Betriebsmodus ist:
- einen Schritt (130) des Umschaltens vom zweiten Betriebsmodus in den ersten Betriebsmodus im Falle der Erfassung einer Unterbrechung der Verbindung.

3. Verfahren nach Anspruch 1, bei dem eine Gruppe von Rechten in Abwesenheit beim Start des Endgeräts ausgewählt wird.

4. Verfahren nach Anspruch 2, bei dem die Schritte des Umschaltens einen Schritt der Überwachung bzw. des Anhaltens einer ersten Arbeitssitzung und einen Schritt der Reaktivierung bzw. des Starts einer zweiten Arbeitssitzung umfassen.

5. Informatikprogramm, umfassend Programmcodebefehle für die Ausführung der Schritte eines Verfahrens nach einem der Ansprüche 1 bis 4, wenn das Programm von einem Datenprozessor ausgeführt wird.

6. Aufzeichnungsträger, der von dem Datenprozessor lesbar ist, auf dem ein Programm aufgezeichnet ist, umfassend Programmcodebefehle für die Ausführung der Schritte eines Verfahrens nach einem der Ansprüche 1 bis 4.

7. Endgerät, das mit mindestens einer Kommunikationsschnittstelle ausgestattet ist, umfassend:
- Mittel (23) zur Analyse der mit dem Endgerät hergestellten Verbindungen, um entweder eine Herstellung einer Verbindung zwischen einem Peripheriegerät (30) und dem Endgerät mit Hilfe einer Kommunikationsschnittstelle oder eine Unterbrechung einer solchen Verbindung zu erfassen,
- Authentifizierungsmittel (21) eines Benutzers des Endgeräts,
- Mittel zur Zuteilung einer ersten Gruppe von Rechten an einen nicht authentifizierten Benutzer durch die Authentifizierungsmittel, welche in Zusammenhang mit den physischen und logischen Ressourcen des Endgeräts definiert sind,
- nach einer Erfassung einer Herstellung einer ersten Verbindung zwischen einem Peripheriegerät (30) und einem Endgerät, Mittel (130) zum Umschalten von einem ersten Betriebsmodus, in dem der Benutzer die erste Gruppe von Rechten besitzt, in einen zweiten Betriebsmodus, in dem der laufende Benutzer des Endgeräts eine zweite Gruppe von Rechten besitzt, die eingeschränkter als die erste Gruppe von Rechten ist,
- nach einer Authentifizierung des Benutzers durch die Authentifizierungsmittel, Mittel (130) zum Umschalten vom zweiten Betriebsmodus, in dem der Benutzer die zweite Gruppe von Rechten besitzt, in den ersten Betriebsmodus, in dem der laufende Benutzer des Endgeräts die erste Gruppe von Rechten besitzt.

8. Endgerät nach Anspruch 7, umfassend Mittel für den Einsatz der Schritte des Verfahrens nach einem der Ansprüche 2 bis 4.

## Claims

1. Method of securing a terminal (10) equipped with at least one communication interface (24), the method comprising,
- a step (110) of analysing the links established with the terminal with a view to detecting either an establishment of a link between a peripheral (30) and said terminal by means of a said communication interface, or an interruption of such a link,
- a step of implementing means of authentication of a user of the terminal,
- a step for allotting a user not authenticated by said means of authentication a first set of rights defined in relation to the physical and logical resources of the terminal,
- a step (130) of toggling, following a detection of an establishment of a first link between a peripheral (30) and said terminal, from a first mode of operation in which the user benefits from the first set of rights to a second mode of operation in which the current user of said terminal benefits from a second set of rights that is more restricted than the first set of rights,
- a step (130) of toggling, following an authentication of said user by said means of authentication, from the second mode of operation in which the user benefits from the second set of rights to a third mode of operation in which the current user of said terminal benefits from the first set of rights.

2. Method according to Claim 1, furthermore comprising, when the terminal is in the second mode of operation,
- a step (130) of toggling from the second mode of operation to the first mode of operation in case of detection of an interruption of said link.

3. Method according to Claim 1, in which a default set of rights is selected when said terminal is started.

4. Method according to Claim 2, in which the toggling steps comprise a step of placing on standby, respectively of stopping, a first work session and a step of reactivating, respectively of starting, a second work session.

5. Computer program comprising program code instructions for the execution of the steps of a method according to any one of Claims 1 to 4 when said program is executed by a data processor.

6. Recording medium readable by a data processor on which is recorded a program comprising program code instructions for the execution of the steps of a method according to any one of Claims 1 to 4.

7. Terminal equipped with at least one communication interface, comprising,
- means (23) for analysing the links established with the terminal with a view to detecting either an establishment of a link between a peripheral (30) and said terminal by means of a said communication interface, or an interruption of such a link,
- means (21) of authentication of a user of the terminal,
- means for allotting a user not authenticated by said means of authentication a first set of rights defined in relation to the physical and logical resources of the terminal,
- means (130) for toggling, following a detection of an establishment of a first link between a peripheral (30) and said terminal, from a first mode of operation in which the user benefits from the first set of rights to a second mode of operation in which the current user of said terminal benefits from a second set of rights that is more restricted than the first set of rights,
- means (130) for toggling, following an authentication of said user by said means of authentication, from the second mode of operation in which the user benefits from the second set of rights to the first mode of operation in which the current user of said terminal benefits from the first set of rights.

8. Terminal according to Claim 7, comprising means for implementing the steps of the method according to any one of Claims 2 to 4.
